# FASCICULE DE BREVET EUROPEEN

(11) **EP 2 501 614 B1**
(45) Date de publication et mention de la délivrance du brevet: **16.03.2016**
(21) Numéro de dépôt: 10792980.4
(22) Date de dépôt: 08.11.2010
(51) Int. Cl.: B64D 29/06

(54) **ENSEMBLE DE MAINTIEN DE L'INTERFACE D'UNE STRUCTURE EXTERNE FIXE D'UNE NACELLE ET D'UN CARTER DE TURBORÉACTEUR**
BEFESTIGUNG EINER TRIEBWERKSGONDEL AM TRIEBWERKSGEHÄUSE
ATTACHMENT SYSTEM FOR MOUNTING AN ENGINE NACELLE STRUCTURE ONTO THE BODY OF AN ENGINE

(30) Priorité: 18.11.2009 FR 0905536
(43) Date de publication de la demande: 26.09.2012
(73) Titulaire: Aircelle, 76700 Gonfreville l'Orcher (FR)
(72) Inventeur: VAUCHEL, Guy, Bernard, 76700 Harfleur (FR); CARUEL, Pierre, 76600 Le Havre (FR); GONIDEC, Patrick, 31530 Bretx (FR); BOURET, Georges, Alain, 76133 Epouville (FR)
(74) Mandataire: Gaillarde, Frédéric F. Ch.
(86) Numéro de dépôt international: PCT/FR2010/052393
(87) Numéro de publication internationale: WO 2011/070260

(56) Documents cités:
- FR-A1- 2 291 091
- FR-A1- 2 900 979
- US-A- 2 653 836

## Description

La présente invention concerne un ensemble propulsif comprenant un ensemble de maintien de l'interface d'un carter de turboréacteur et de la structure d'un inverseur d'une nacelle entourant ledit turboréacteur.

Un aéronef est mu généralement par un ensemble propulsif comprenant un turboréacteur entouré d'une nacelle.

Le turboréacteur comporte à l'amont des pales de soufflante actionnées par un moteur. Les pales de soufflantes sont entourées d'un carter permettant de monter ledit turboréacteur dans la nacelle.

La soufflante du turboréacteur se compose essentiellement d'un arbre rotatif portant une pluralité d'aubes. A leur extrémité radiale, les aubes sont entourées circonférentiellement par un carter.

Les carters de soufflante sont généralement des éléments métalliques usinés.

Le turboréacteur peut être un turboréacteur à double flux capable de générer un flux d'air chaud (également appelé flux primaire) issu de la chambre de combustion du turboréacteur, et un flux d'air froid (flux secondaire) issu de la soufflante qui circule à l'extérieur du turboréacteur à travers un canal annulaire, également appelé « veine », formé entre un carénage du turboréacteur et une paroi interne de la nacelle. A l'arrière de la nacelle, les deux flux primaires et secondaires se mélangent.

Cette nacelle est généralement équipée d'un inverseur de poussée. L'inverseur de poussée lors de l'atterrissage d'un avion permet d'améliorer la capacité de freinage de l'avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Plus précisément, une nacelle présente généralement une structure comprenant une entrée d'air en amont du moteur, une structure médiane destinée à entourer le carter du turboréacteur, et une structure aval comprenant une structure interne fixe (« IFS ») et une structure externe fixe (« OFS ») destinée à entourer la chambre de combustion du turboréacteur et abritant des moyens d'inversion de poussée.

Les moyens d'inversion de poussée sont variés et peuvent être sous la forme d'au moins un capot mobile, dits « capots d'inversion de poussée », se mouvant en translation grâce à des actionneurs selon une direction sensiblement parallèle à un axe longitudinal de la nacelle.

Lors de cette phase en vol, la structure de l'inverseur de poussée subit des efforts aérodynamiques axiaux qui tendent à faire reculer longitudinalement les moyens d'inversion de poussée par rapport au turboréacteur.

Afin de ne pas uniquement reporter tous ces efforts sur les points d'attache de la structure aval sur le mât, la partie amont de de la structure aval, notamment la structure externe fixe, est liée en extrémité aval du carter de soufflante du turboréacteur.

La structure de l'inverseur est généralement réalisée en deux demi parties articulées en partie supérieure sur le pylône, appelée structure en "D-duct". Dans cette configuration le maintien entre le carter et la structure externe fixe est réalisé par une partie mâle, généralement portée par la structure externe fixe, coopérant dans une partie femelle, généralement portée par le carter.

Cependant, une telle configuration ne peut convenir que pour une structure en "D-duct" car le dégagement des deux structures en vis-à-vis ne peut se faire que dans un sens radial.

La structure aval peut également être sous la forme d'un ensemble externe en une seule partie sans rupture de continuité structurale, appelée structure en "O-duct". Cet ensemble externe est dissocié de la structure interne entourant le moteur et est actionné pour donner l'accès au corps du moteur par un déplacement rectiligne vers l'arrière de la nacelle au-delà de la valeur de recul nécessaire pour l'inversion de poussée. Le maintien de la structure externe fixe et du carter ne peut se faire à l'identique du maintien des structures en "D-duct".

Le maintien est alors réalisé par des boulons une fois que le carter et la structure externe fixe sont montés bord à bord.

Cependant, un tel maintien ne permet pas une accessibilité rapide au moteur.

Le document FR 2 291 091 divulgue un collier de serrage permettant de relier une structure externe fixe à un carter de soufflante : bien que plus rapide à défaire que des boulons de maintien, un tel collier reste difficile à mettre en place et à ôter, et n'est donc pas non plus optimal pour permettre une accessibilité aisée au moteur.

Un but de la présente invention est donc de fournir un ensemble de maintien permettant un maintien uniformément réparti sur la circonférence de l'interface du carter et de la structure externe fixe, de réduire le temps de la maintenance, de faciliter cette dernière et de limiter le nombre de pièces nécessaires et le coût.

A cet effet, l'invention a pour objet un ensemble propulsif comportant un turboréacteur logé dans une nacelle apte à être reliée à l'aéronef par un mât d'accrochage, le turboréacteur comprenant des pales de soufflante entourées d'un carter monté bord à bord avec une structure externe fixe de la structure aval de la nacelle qui abrite des moyens d'inversion de poussée, ledit ensemble propulsif comportant un ensemble de maintien comprenant :
- un premier élément en relief appartenant à l'extrémité amont de la structure externe fixe ;
- un deuxième élément en relief appartenant à l'extrémité aval du carter ;
   lesdits premier et deuxième éléments en relief étant configurés pour être mis en contact l'un avec l'autre ;
- deux demi-anneaux formés par une paroi définissant un logement, configuré pour recevoir le premier et le deuxième éléments en relief lorsque le carter et la structure fixe externe sont montés bord à bord, et des moyens de butée configurés pour maintenir les premier et deuxième éléments en relief dans le logement, au moins un demi-anneau étant articulé sur le mât d'accrochage ou sur le carter par l'intermédiaire d'un pivot fixe.

L'ensemble selon l'invention permet donc de relier, par les demi-anneaux, l'extrémité aval du carter et l'extrémité amont de la structure externe fixe de la structure aval abritant les moyens d'inversion de poussée.

Cet ensemble permet donc de verrouiller et de déverrouiller l'interface du carter et de la structure externe fixe de manière simple, efficace, rapide en impliquant peu de pièces. Le temps de maintenance ainsi que le coût sont réduits et maîtrisés.

Grâce à la configuration annulaire de l'invention, le maintien est uniformément réparti sur la circonférence de l'interface.

Selon d'autres caractéristiques de l'invention, l'ensemble de l'invention comporte l'une ou plusieurs des caractéristiques optionnelles suivantes considérées seules ou selon toutes les combinaisons possibles :
- la paroi forme un logement de section transversale sensiblement en forme de U ou de V ;
- un jeu longitudinal et/ou transversal est présent entre la surface non en vis-à-vis des éléments en relief et la paroi formant le logement ;
- au moins un élément en relief présente une rampe configurée pour coopérer avec au moins un bord latéral de la paroi qui présente une surface inclinée complémentaire à la rampe lorsque ledit élément en relief est inséré dans le logement ce qui autorise un léger désalignement des deux éléments en relief avant la fermeture du demi-anneau ;
- au moins un élément en relief comporte un moyen d'étanchéité de sorte à assurer l'étanchéité entre le premier élément en relief et le deuxième élément en relief lorsque ces derniers sont reçus dans le logement ce qui permet d'éviter toute fuite du flux d'air froid et du flux d'air chaud afin de ne pas générer de perturbation sur les performances de l'ensemble propulsif de l'invention ;
- le ou les éléments en relief comportent un moyen de centrage transversal par rapport à l'axe longitudinal de la nacelle ce qui permet de faciliter la fermeture du carter et de la structure externe fixe sans alourdir l'ensemble de maintien de l'invention ;
- au moins un demi-anneau comporte un moyen de levier permettant de faciliter le passage de la position de verrouillage dans laquelle les deux éléments en relief sont reçus dans le logement à la position de déverrouillage dans laquelle les éléments en relief sont hors du logement ;
- les deux demi-anneaux sont fixés entre eux par des moyens de fixation ce qui permet d'assurer l'effort de serrage et de maintien des éléments en relief ;
- au moins un demi-anneau est formé d'une multitude de parties afin d'adapter la souplesse ou la rigidité du demi-anneau ;
- au moins un demi-anneau comporte un moyen de maintien configuré pour supporter ledit demi-anneau en position de déverrouillage ;
- chaque un demi-anneau est monté de manière articulée à sensiblement 12h de la nacelle..

L'invention sera davantage comprise à la lecture de la description non limitative qui va suivre, faite en référence aux figures ci-annexées.
- la figure 1 est une coupe longitudinale d'un ensemble propulsif de l'invention ;
- la figure 2 est une vue en perspective dudit ensemble propulsif de la figure 1 ;
- la figure 3 est une vue en perspective d'un mode de réalisation d'un ensemble de maintien de l'invention ;
- les figures 4 à 7 sont des coupes transversales de variantes du mode de réalisation de la figure 3 ;
- la figure 8 est une vue en perspective d'un mode de réalisation du rattachement des demi-anneaux de l'ensemble de l'invention ;
- les figures 9 à 14 sont des vues de côté de variantes du mode de réalisation de la figure 8 ;
- les figures 15 et 16 sont des vues de côté de modes de réalisation de rattachement de deux demi-anneaux de l'ensemble de maintien de l'invention entre eux ;
- la figure 17 est une coupe transversale d'un mode de réalisation de l'ensemble de maintien de l'invention ;
- les figures 18 à 21 sont des vues en perspective de côté de modes de réalisation d'un demi-anneau de l'ensemble de maintien de l'invention ;
- les figures 22 et 23 sont des vues en perspective de côté d'une variante de l'ensemble de maintien de l'invention ;
- la figure 24 est une vue en perspective de devant d'une variante de l'ensemble de maintien de l'invention monté sur l'ensemble propulsif ;
- la figure 25 est un agrandissement de la zone XXV de la figure 24 ;
- les figures 26 à 28 sont des coupes transversales d'un demi-anneau de l'ensemble de maintien de l'invention monté sur le capot de la structure externe fixe de l'ensemble propulsif de l'invention ;
- la figure 29 est un agrandissement de la zone XXIX du mode de réalisation de la figure 28 ;
- les figures 30 à 31 sont des vues en perspective de variantes d'accrochage d'un demi-anneau de l'ensemble de maintien de l'invention.

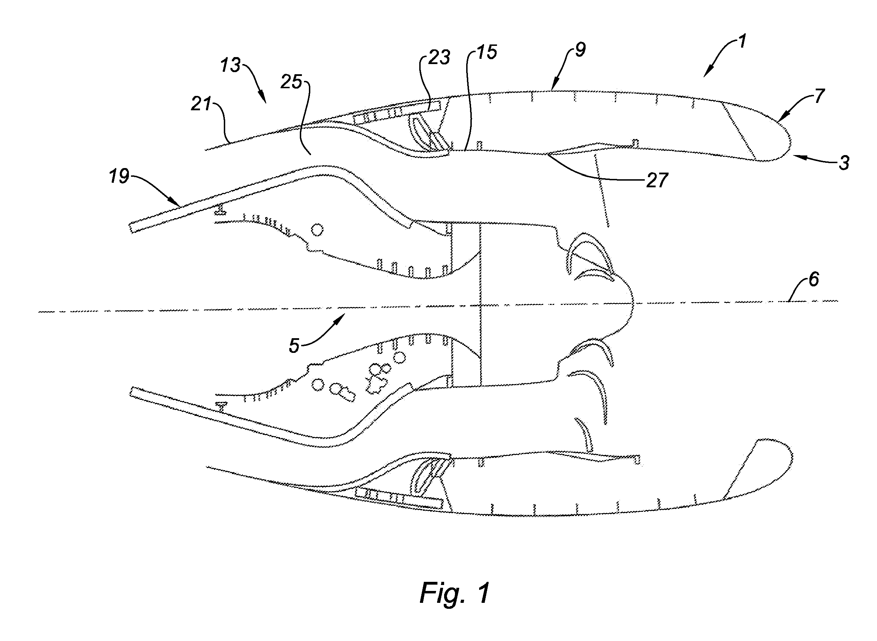

Selon le mode de réalisation représenté à la figure 1, l'ensemble propulsif 1 de l'invention comporte une nacelle 3 entourant un turboréacteur 5 qui présentent tous les deux un axe de révolution ou axe longitudinal principal 6. La nacelle 3 comprend typiquement une structure amont d'entrée d'air 7, une structure médiane 9 entourant les pales d'une soufflante 11 du turboréacteur 5, et une structure aval 13. La structure aval 13 comporte de manière connue en soi une structure externe 15, dite OFS, abritant des moyens d'inversion de poussée 17, et une structure interne 19, dite IFS. Les moyens d'inversion de poussée sont ici sous la forme d'un capot mobile 21 en translation longitudinale vers l'aval de la nacelle 3 et d'une grille fixe 23 au travers de laquelle est dévié le flux d'air froid. La nacelle 3 est fixée en aval par l'intermédiaire de tout moyen approprié, notamment de bielles, à un mât de suspension, non représenté à la figure 1, destiné au rattachement de la nacelle 3 sous une aile d'aéronef.

La structure externe fixe 15 et la structure interne fixe 19 définissent également un canal annulaire 25 d'écoulement au travers duquel le flux d'air froid est destiné à circuler.

La structure interne fixe 19 est destinée à couvrir une partie aval du turboréacteur s'étendant en aval des pales de la soufflante 11.

Les pales de soufflante 11 du turboréacteur sont surmontées circonférentiellement par un carter 27. Le carter 27 est destiné à être rattaché à la structure externe fixe 15 de la structure aval. Plus particulièrement, l'extrémité amont du carter 27 est configurée pour être reliée à l'extrémité aval de la structure externe fixe 15. Dans ce cas, le carter 27 et la structure externe fixe 15 sont dits « montés bord à bord ».

Selon l'invention, un ensemble de maintien 101 permet de maintenir et de verrouiller la structure externe 15 et le carter 27. L'ensemble de l'invention 101 comprend :
- un premier élément en relief 105 appartenant à l'extrémité amont de la structure externe fixe 15;
- un deuxième élément 107 en relief appartenant à l'extrémité aval du carter 27 ;
   lesdits premier 105 et deuxième 107 éléments en relief étant configurés pour être mis en contact l'un avec l'autre ;
- deux demi-anneaux 109 formés par une paroi définissant un logement 111, configuré pour recevoir le premier 105 et le deuxième 107 éléments en relief lorsque le carter 27 et la structure fixe externe 15 sont montés bord à bord, et des moyens de butée 113 configurés pour maintenir les premier 105 et deuxième 107 éléments dans le logement 111.

L'ensemble de maintien de l'invention 101 permet de relier par les demi-anneaux 109 l'interface de l'extrémité aval du carter 27 et de l'extrémité amont de la structure externe fixe 15.

De part la configuration annulaire de l'invention, le maintien est uniformément réparti sur la circonférence de l'interface.

L'ensemble de maintien de l'invention 101 permet en outre de verrouiller et de déverrouiller cette interface de manière simple, efficace, rapide et en impliquant peu de pièces. Le temps de maintenance, les coûts et la masse sont réduits et maîtrisés par rapport à l'art antérieur. En effet, pour verrouiller ou dévérrouiller l'ensemble de maintien, il suffit de translater le carter 27 et la structure externe fixe 15 longitudinalement par rapport à l'axe longitudinal puis faire pivoter chaque demi-anneau 109 sur les éléments en relief 105 et 107 mis en vis-à-vis ou respectivement de dégager par pivotement ledit demi-anneau 109 hors des éléments en relief 105 et 107. Par conséquent, il est inutile de désemboîter une partie mâle d'une partie femelle ou d'enlever des moyens ponctuels pour dégager le carter 27 et la structure externe fixe 15. Les moyens de butée 113 permettent de manière avantageuse de maintenir dans le logement 111 les deux éléments en relief 105 et 107.

On définit la « position de verrouillage » la position de l'ensemble de maintien de l'invention 101 dans laquelle les deux éléments en relief 105 et 107 appartenant au carter 27 et à la structure externe fixe 15 sont reçus dans le logement 111 d'au moins un demi-anneau 109.

On définit la « position de déverrouillage » ou « de maintenance » la position de l'ensemble de maintien de l'invention 101 dans laquelle les deux éléments en relief 105 et 107 appartenant au carter 27 et à la structure externe fixe 15 sont hors du logement 111 d'au moins un demi-anneau 109.

La paroi de chaque demi-anneau 109 définit donc le logement 111 et des moyens de butée 113. Les moyens de butée 113 sont par exemple formés par le prolongement latéral de la paroi définissant le logement 111. Au moins un, voire les deux, demi-anneau 109 peut être un double couteau, à savoir la paroi forme un logement 111 de section transversale en forme de cuvette, notamment de section transversale sensiblement en forme de V ou de U. Dans ce cas, les éléments en relief 105 et 107 sont sous la forme de bride normale ou transversale à l'axe longitudinal 6 de la nacelle 3. Avantageusement, les éléments en relief 105 et 107 peuvent être de structure continue afin de garantir une répartition de charge uniforme sur lesdits éléments en relief 105 et 107.

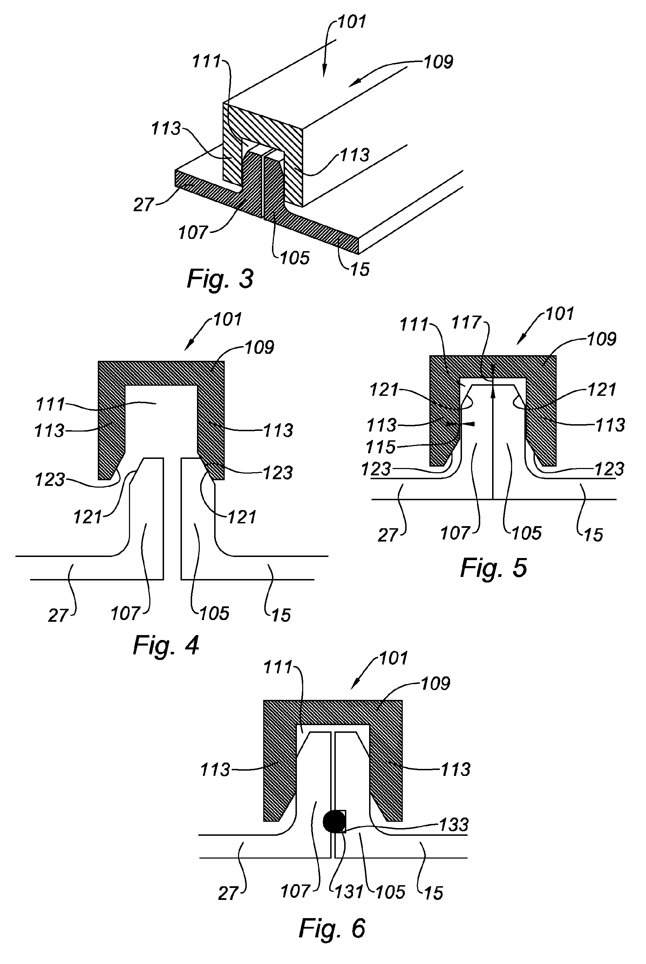

Comme représenté sur les figures 4 et 5, lorsque les premier 105 et deuxième 107 éléments sont reçus dans le logement 111, lesdits éléments 105 et 107 sont en contact. Selon une variante, la paroi formant le logement 111 et les moyens de butée 113 du demi-anneau 109 n'est pas en contact avec la surface opposée, à savoir non en vis-à-vis, desdits éléments 105 et 107 ce qui définit un jeu 115 et 117. Le jeu 115 et/ou 117 permet de limiter le déplacement transversal et/ou longitudinal des éléments en relief 105 et 107. Le jeu 115 peut donc être longitudinal, à savoir selon l'axe longitudinal principal 6 de la nacelle ou transversal 117, à savoir selon un axe perpendiculaire à l'axe principal 6. Il est possible d'avoir un jeu à la fois longitudinal 115 et transversal 117 comme représenté aux figures 4 et 5. Le jeu 115 et 117 permet de manière avantageuse de prendre en compte les tolérances de fabrication et de forme des éléments en relief 105 et 107 à maintenir. De manière avantageuse, un tel jeu 115 et 117 permet une mise en place de l'interface du carter 27 et de la structure externe fixe 15 sans contrainte du demi-anneau 109. De ce fait dans le cas d'un jeu longitudinal 115, lorsque le turboréacteur 5 est en fonctionnement, la structure externe fixe 15 subit une poussée qui tend à l'éloigner du carter 27. Les deux éléments en relief 105 et 107 viennent alors en contact des moyens de butée 113 et sont de ce fait retenus dans le logement 111.

Au moins un élément en relief 105 ou 107 peut présenter une rampe 121 configurée pour coopérer avec au moins un bord latéral de la paroi qui présente une surface inclinée 123 complémentaire à la rampe 121 lorsque ledit élément en relief 105 ou 107 est inséré dans le logement 111 ce qui autorise un léger désalignement des deux éléments en relief 105 et 107 avant la fermeture du demi-anneau 109. Ainsi, il est avantageusement possible de rapprocher les deux éléments 105 et 107 en relief lors du verrouillage du carter 27 et de la structure externe fixe 15. Selon le mode de réalisation représenté aux figures 4 et 5, les deux éléments 105 et 107 ont leurs parois non en vis-à-vis présentant une telle rampe 121. Dans ce cas, les bords latéraux de la paroi 113 comporte chacun une surface inclinée 123 sur laquelle une rampe 121 est capable de glisser. Comme représenté sur la figure 4, lors de l'introduction des éléments en relief 105 et 107 dans le logement 111, la rampe 121 glisse sur la surface inclinée 123 jusqu'à ce que les éléments en relief 105 et 107 soient introduits dans le logement 111.

Typiquement, la rampe 121 peut présenter un angle inférieur ou égal à environ 30°.

Comme représenté sur la figure 6, au moins un élément en relief 105 peut comporter un moyen d'étanchéité 131 de sorte à assurer l'étanchéité entre le premier élément en relief 105 et le deuxième élément en relief 107 lorsque ces derniers sont logés dans le logement 111 ce qui permet d'éviter toute fuite du flux d'air froid et du flux d'air chaud afin de ne pas générer de perturbation sur les performances de l'ensemble propulsif 1 de l'invention. Le moyen d'étanchéité 131 peut être sous la forme d'un joint logé dans logement 133 ménagé dans un des éléments en relief 105.

Le ou les éléments en relief 105 et 107 peuvent comporter un moyen de centrage transversal par rapport à l'axe longitudinal 6 de la nacelle 3 ce qui permet de faciliter la fermeture du carter 27 et de la structure externe fixe 15 sans alourdir l'ensemble de maintien de l'invention 101. Un tel moyen de centrage permet de limiter les efforts engendrés par l'éclatement d'une pale soufflante 11 qui tend à désaligner et à séparer le carter 27 et la structure externe fixe 15.

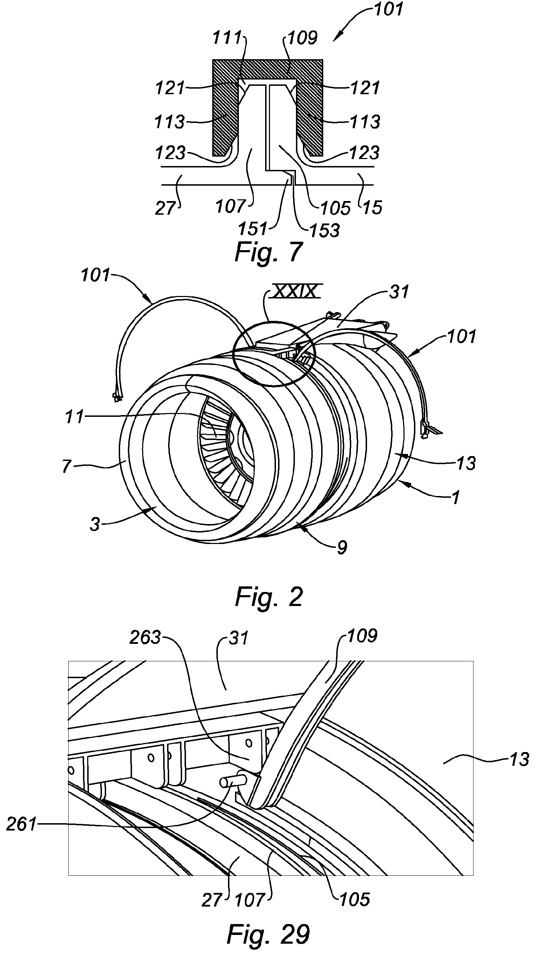

Le moyen de centrage peut être sous la forme d'une excroissance 151 appartenant au carter 27 configurée pour venir dans un renfoncement 153 ménagé dans la structure externe fixe 15 (voir figure 7). Ainsi, tout effort rotationnel provoqué par la rotation de la soufflante déséquilibrée peut être absorbé. De ce fait, chaque demi-anneau 109 ne supporte que les efforts axiaux.

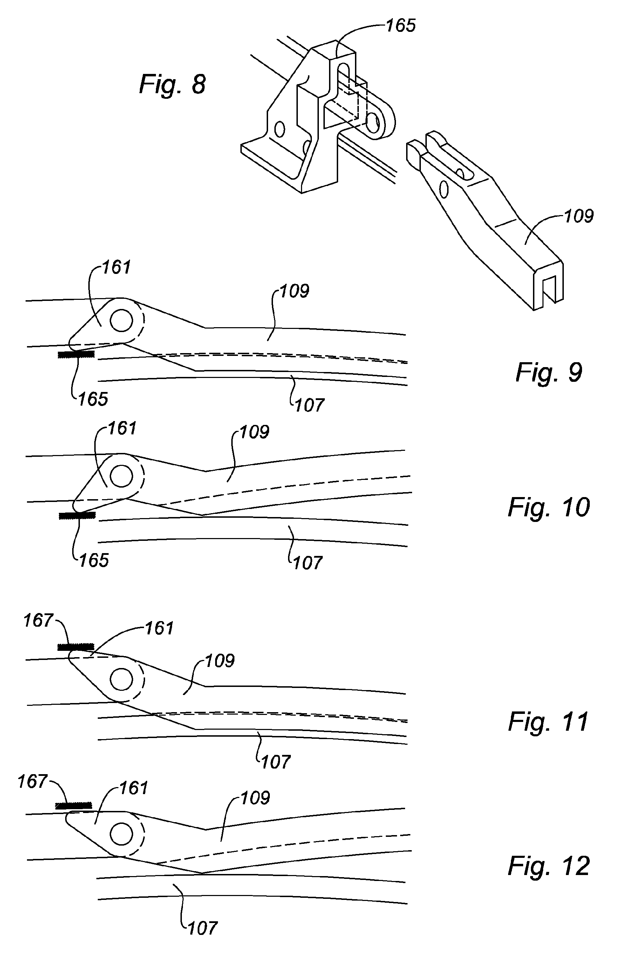

Au moins un, voire les deux, demi-anneau 109 peut comporter un moyen de levier 161 permettant de faciliter le verrouillage et le déverrouillage dudit demi-anneau 109 sur les éléments en relief 105 et 107 (voir figures 8 à 14). Le moyen de levier permet de réduire le débattement angulaire dudit demi-anneau 109. En particulier, dans le cas où un demi-anneau 109 est articulé grâce à un pivot à 12h de la nacelle, à savoir à proximité ou sur le mât d'accrochage 31 lorsque ce dernier est vu par l'entrée de la nacelle 3, il est parfois impossible d'ouvrir un demi-anneau 109 de manière suffisante pour dégager le carter 27 et la structure externe fixe 15. Par conséquent, le système de levier 161 permet d'assurer le dégagement dudit carter 27 et de ladite structure externe fixe 15 avec un angle de pivotement faible, à savoir inférieur à 15°. Ainsi, le système de levier 161 peut être monté en amont du point de pivot des demi-anneaux 109.

Le moyen de levier peut être une excroissance 161 configurée pour être attachée au demi-anneau 109, notamment à une extrémité, et à prendre appui sur au moins une surface interne 165 du support 163 de chaque demi-anneau 109. Avantageusement, en position de verrouillage, le moyen de levier 161 n'est pas en contact avec le carter 27, la structure externe fixe 15 ou le support 163 dudit anneau 109 afin de ne pas générer d'effort parasite.

Comme représenté sur les figures 9 et 10, à partir de la position de verrouillage, on déplace d'un angle faible, inférieur à 15°, le demi-anneau 109 de sorte à dégager lesdits éléments 105 et 107. De ce fait, l'excroissance 161 vient en contact avec la surface 165 du support ce qui a pour effet de réaliser un effet de levier obligeant de ce fait le demi-anneau 109 à dégager complètement lesdits éléments en relief 105 et 107. Dans le cas des figures 9 et 10, le support 165 sur lequel le moyen de levier 161 s'appuie, est disposé sur la surface « inférieure », à savoir la plus proche de l'interface de carter 27 et la structure externe fixe 15.

Selon une variante représentée aux figures 11 et 12, le support 167 sur lequel le moyen de levier 161 s'appuie, est disposé sur la surface « supérieure », à savoir la plus éloignée de l'interface de carter 27 et la structure externe fixe 15. Cette configuration permet une aide à l'encastrement du demi-anneau 109 sur les éléments en relief 105 et 107.

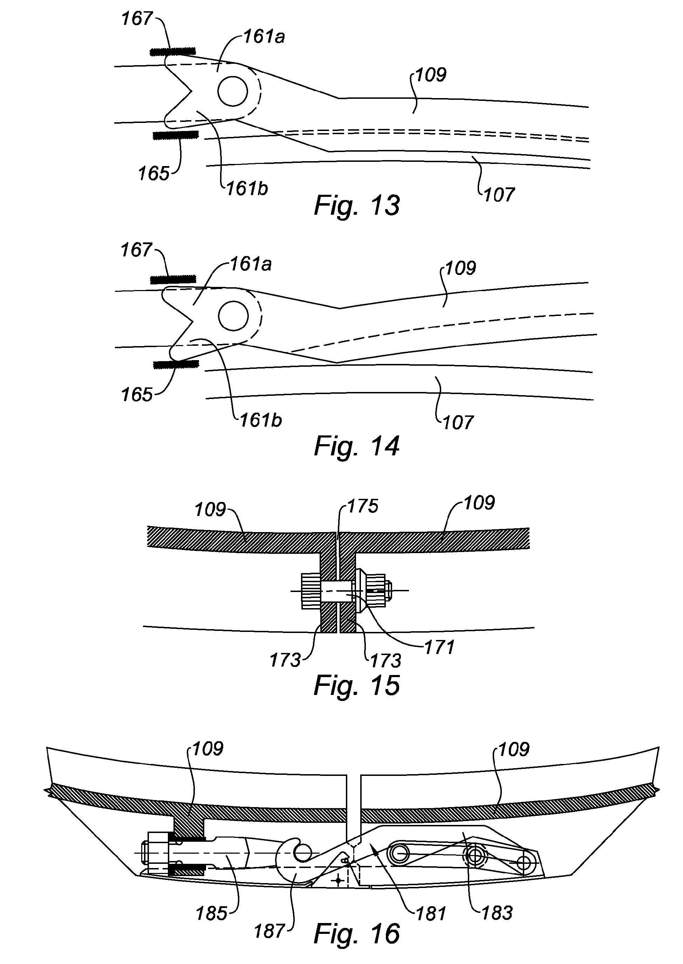

Selon encore une autre variante représentée aux figures 13 et 14, le moyen de levier peut comporter deux excroissances 161a et 161b reliées entre elles et configurées chacune pour prendre appui sur la surface inférieure et sur la surface supérieure.

Comme représenté sur la figure 15, les deux demi-anneaux 109 peuvent être fixés entre eux par des moyens de fixation ce qui permet d'assurer l'effort de serrage et de maintien des éléments en relief 105 et 107. un élément de centrage radial peut être adjoint soit par rajout d'un pion de centrage soit par intégration de formes complémentaires dans l'une et l'autre extrémités des demi-anneaux.

En position de verrouillage, les deux demi-anneaux 109 peuvent se rejoindre avantageusement en position 6h par rapport à la nacelle 3 en vue de face. Dans ce cas, les moyens de fixation desdits demi-anneaux 109 sont localisés dans cette position 6h. Pour assurer l'effort de serrage et de maintien des éléments en relief 105 et 107, le verrouillage des deux demi-anneaux 109 peut être réalisé sous tension, notamment pas des moyens de fixation mécaniques et manuels.

Ainsi, les moyens de fixation peuvent comporter au moins un boulon 171 (voir figure 15) ce qui permet de verrouiller de manière simple et peu onéreuse les deux demi-anneaux 109. Pour ce faire, l'extrémité libre d'un demi-anneau 109 peut comporter deux parois 173 sensiblement perpendiculaire au reste des demi-anneaux, autrement dit allant dans la direction radiale transverse à l'axe longitudinal 3 de la nacelle 3. Lesdites deux parois sont alors en vis-à-vis lorsque les deux demi-anneaux 109 sont en position de verrouillage. Le boulon 171 peut être associé à un écrou traversant les deux parois 173 afin de maintenir le verrouillage. L'interface des deux parois 173 peut être réalisée avec un jeu 175 après serrage du boulon 171 qui est réalisé de sorte à garantir l'effort de maintien des deux anneaux 109 entre eux. Selon cette configuration, il peut exister un autre appui (non représenté) réalisé entre la surface interne des demi-anneaux 109 et les surfaces non en vis-à-vis des éléments en reliefs 105 et 107.

Selon le mode de réalisation de la figure 16, les moyens de fixation comportent au moins un verrou trois points à crochet 181 ce qui permet d'avoir un verrou permanent sur le demi-anneau 109. Selon la configuration représenté sur cette figure 16, un des demi-anneaux 109 supporte la partie du verrou comportant le crochet 183 et l'autre demi-anneau 109 supporte la partie comprenant l'organe de retenu 185 dudit crochet 187. De manière avantageuse, l'organe de retenu 185 peut être réglable de sorte à permettre le réglage de la tension de verrouillage engendrée par la coopération du crochet 187 et de l'organe de retenu 185 lorsque les deux demi-anneaux 109 sont en position de verrouillage.

Selon une variante, le contact des demi-anneaux 109 en position de verrouillage est réalisé dans un plan sensiblement proche de l'alignement du verrou trois points 181. La mise en butée des demi-anneaux peut être à identique à celle de la configuration précédente.

Selon une autre variante non représentée, au moins deux verrous trois points à crochet 181 sont montés de part et d'autre des demi-anneaux 109 ce qui permet d'augmenter la fiabilité du verrouillage.

Selon encore une autre variante, un verrou trois points 181 peut avoir certains de ses composants doublés afin d'améliorer la fiabilité dudit verrou 181. En particulier, il est possible d'avoir un seul organe de retenu 185 configuré pour recevoir deux crochets distincts 187 montés en vis-à-vis des demi-anneaux 109. Il est également possible de doubler la liaison menant de l'axe du verrou trois points 181 à l'attache sur le crochet 187 afin de garantir un taux de fiabilité élevé. De même, le pivot du crochet 187 peut être doublé par la présence de deux pivots concentriques de même axe mis l'un dans l'autre. En outre les moyens de fixation peuvent être supportés par une structure d'entourage monobloc et tolérante aux dommages qui peut également supporter le demi-anneau 109.

Dans cette configuration, à titre d'exemple non représenté, une première bande latérale peut venir en recouvrement d'un côté du logement recevant un premier élément en relief 105 et une deuxième bande latérale en recouvrement l'autre élément en relief 107. Les bandes latérales peuvent venir se rejoindre en position sensiblement 12h de la nacelle 3.

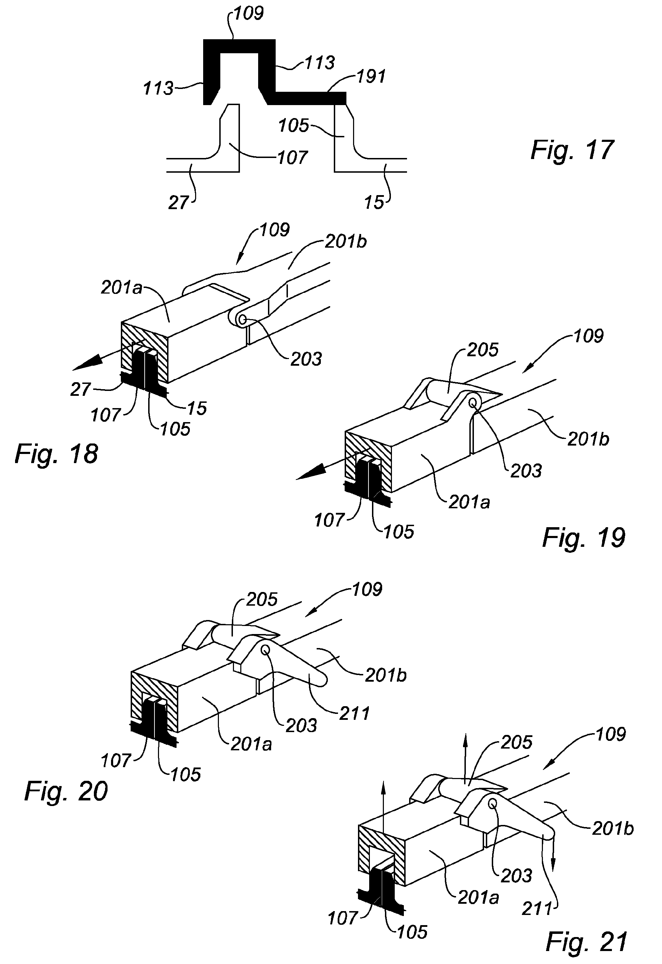

Au moins un demi-anneau 109 peut comporter un détrompeur 191 afin d'éviter de fermer et de verrouiller ledit demi-anneau 109 sans les éléments en relief 105 et 107, à savoir sans que les deux éléments en relief 105 et 107 soient reçus dans le logement 111. Le détrompeur 191 peut être sous la forme d'un prolongement longitudinal 191 d'une des parois des moyens de butée 113 (voir figure 17). De ce fait, ce prolongement 191 vient buter contre l'élément en relief 105 de la structure externe fixe ou du carter. Selon une variante, le détrompeur 191 peut être sous la forme de deux prolongements longitudinaux des parois des moyens de butée 113. En outre, un tel détrompeur est vu par l'opérateur qui repère alors qu'un des éléments en relief 105 et 107 n'est pas reçu dans le logement 111 du demi-anneau 109.

Le détrompeur 191 peut être local, multiple ou continu. Autrement dit, le détrompeur 191 peut s'étendre sur toute ou une partie de la périphérie du demi-anneau 109 en un ou plusieurs secteurs.

Au moins un, voire les deux, demi-anneau 109 peut être réalisé sous forme monobloc ou formé d'une multitude de parties afin d'adapter la souplesse ou la rigidité du demi-anneau 109. Dans le cas où un demi-anneau 109 est réalisé en plusieurs parties, il est possible d'adjoindre un moyen de renfort sensiblement annulaire, notamment sur la paroi externe dudit demi-anneau 109.

Ainsi, un demi-anneau 109 peut être composé de deux parties. La première partie peut comporter l'articulation et le verrouillage et la seconde partie peut comporter le logement 111 configuré pour recevoir les premier 105 et deuxième 107 éléments en relief. La seconde partie peut être réalisée de manière monobloc ou en plusieurs secteurs, et/ou dans plusieurs matières, telles que l'aluminium ou le titane. Dans le cas où la seconde partie est réalisée en plusieurs secteurs, les secteurs peuvent être liés entre eux par exemple par des rivets. La présence de plusieurs secteurs permet de manière avantageusement de lever le demi-anneau 109 sur des parties avec un faible débattement, notamment inférieur à 10°.

Ainsi, au moins un, voire chaque, secteur 201a, 201b peut être monté de manière articulée sur le suivant, comme représenté sur les figures 18 à 21.

Comme représenté sur la figure 18, un secteur 201 a est lié à un secteur 201 b adjacent par un axe 203 permettant le pivotement du secteur 201a.

La configuration de positionnement du pivot se fait suivant les figures 18 et 19 selon la position de l'effort de traction afin de ramener le point d'articulation dans le plan adéquat.

Comme représenté sur la figure 19, le secteur 201a peut contenir une butée au niveau de l'articulation 205 pour aider à l'ouverture du secteur suivant.

Comme représenté sur les figures 20 et 21, l'articulation du secteur 201 a est associée à un ou deux leviers 211 montés de part et d'autre dudit secteur 201 a afin de faciliter le déverrouillage et la levée du secteur 201a. Le ou les leviers 211 peuvent prendre appui sur le carter 27 et/ou sur la structure externe fixe 15. Comme illustré sur la figure 21, la rotation du premier secteur 201a entraîne le contact du levier 211 sur la surface fixe du carter 27 ou de la structure externe fixe 15. Grâce à ce contact, le second secteur 201b peut également se lever pour atteindre la position de déverrouillage.

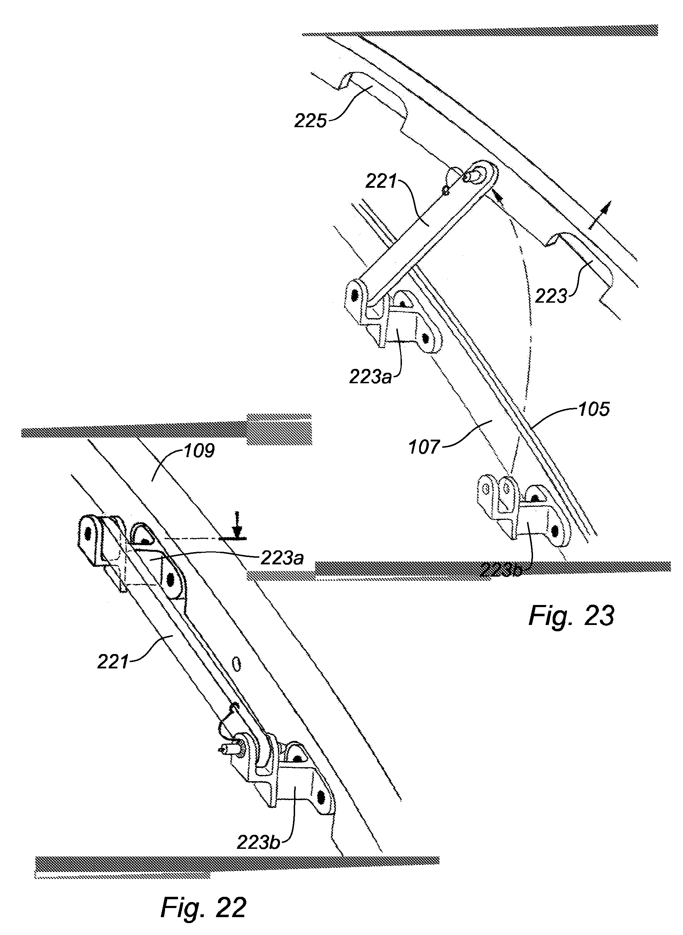

Au moins un, voire les deux, demi-anneau 109 peut comporter un moyen de maintien configuré pour supporter ledit demi-anneau 109 en position de déverrouillage. Comme représenté sur les figures 22 et 23, le moyen de maintien peut être sous la forme d'une bielle 221 fixée sur ledit demi-anneau 109 et sur un support 223a et 223b fixé sur le carter 27 ou sur la structure externe fixe 15, notamment sur un des éléments en relief 105 ou 107. Pour ce faire, le demi-anneau 109 peut comporter des ouvertures 225 et 227 afin de ne pas interférer avec les supports fixés sur un des éléments en relief 105 et 107 lorsque le demi-anneau 109 est en position de verrouillage, à savoir logeant les deux éléments en relief 105 et 107. De manière plus précise, le support 223a et 223b peut être composé d'une première ferrure 223a et d'une seconde ferrure 223b, la première ferrure configurée pour recevoir l'extrémité pivotante de la bielle 221 et la seconde ferrure 223b pouvant recevoir l'extrémité de la bielle 221 reliée au demi-anneau 109. Typiquement, la première ferrure 223a et la seconde ferrure 223b sont disposées du même côté du demi-anneau 109.

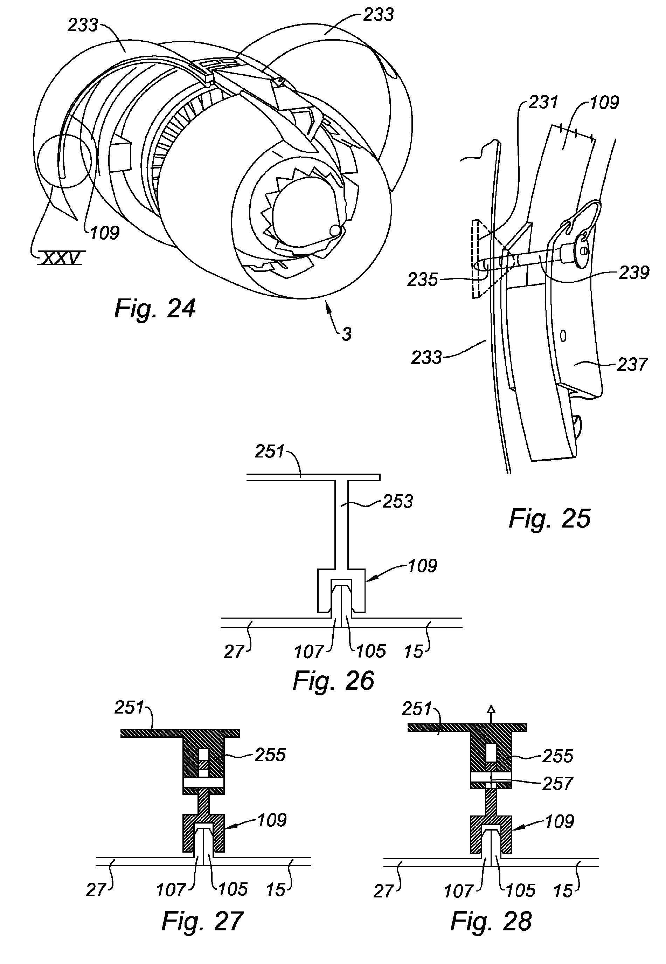

Selon une autre variante représentée sur les figures 24 et 25, le moyen de maintien peut comporter une ferrure 231 montée dans le capot 233 de structure externe fixe ce qui permet de ne pas réaliser le dégagement au niveau du demi-anneau 109 et de réduire la masse dudit moyen de maintien. Pour ce faire, le capot 233 peut être formé de deux parties configurées pour être soulevées en position de déverrouillage et qui sont fixées en position normale de fonctionnement en position 6h de la nacelle 3. La ferrure 231 est alors disposée en aval du capot 233 et comprend un logement 235. Sur le demi-anneau 109 est disposé un support 237 comportant une tige 239 configurée pour coopérer avec le logement 235. Ainsi, de manière simple, lorsque l'opérateur désire désolidariser le capot 233 et le demi-anneau 109, ledit opérateur retire la tige 239 du logement 235.

L'ensemble de l'invention 101 peut comporter un moyen de détection de la position des composants de l'ensemble entre eux, à savoir des éléments en relief 105 et 107, des demi-anneaux 109. A titre d'exemple, on peut employer un moyen de détection sous forme de capteurs électroniques permanents, comme un capteur de proximité. Par ailleurs, il est possible de positionner lesdits capteurs par exemple en partie 6h des deux demi-anneaux 109 ou encore au niveau des moyens de fixation des deux demi-anneaux 109.

Par ailleurs, l'ensemble de l'invention 101 peut comporter un moyen pour détecter la tension de verrouillage des deux demi-anneaux 109.

Selon un mode de réalisation non représenté aux figures 26 à 28, au moins un demi-anneau 109 est lié au capot de la soufflante 251, de manière rigide ou non, qui est articulé sensiblement en partie 12h de la nacelle 3. Ainsi, de manière avantageuse, il est possible d'utiliser ledit capot de la soufflante 251 comme support à au moins un, voire les deux, demi-anneau 109. Pour ce faire, ledit demi-anneau 109 peut être associé à la structure du capot de la soufflante 251 de manière rigide par exemple par l'intermédiaire d'une cloison 253 (voir figure 26) ou par l'intermédiaire de ferrure 255 dans laquelle le demi-anneau 109 est apte à être reçu (voir figures 27 et 28).

Dans le mode de réalisation représenté sur les figures 27 et 28, ledit demi-anneau 109 est monté dans la ferrure 255 de sorte à présenter un jeu latéral 257 ce qui permet une meilleure préhension du capot 251 lors du dégagement du demi-anneau 109.

Comme représenté sur la figure 29, au moins un, voire les deux, demi-anneau 109 est monté sur la partie supérieure de la structure fixe externe 15 et donc de la nacelle 3, ce qui permet d'avoir un dégagement le plus important possible et de faciliter l'accès au turboréacteur 5. Ainsi, un, voire les deux, demi-anneau 109 peut être monté de manière articulée sensiblement à 12h de la structure fixe externe 15 et donc de la nacelle 3. De manière plus précise, chaque demi-anneau 109 peut être articulé sur le mât d'accrochage 31 par l'intermédiaire d'un pivot 261 fixe. Pour ce faire, une ferrure (non représentée) peut être rapportée sur le mât d'accrochage 31. Il est également possible de réunir les deux ferrures des deux demi-anneaux 109 par une structure rigide interne 263 le plus proche possible de l'axe de traction afin d'éviter tout effort engendré par le mouvement de type bras de levier engendré par le déverrouillage d'un demi-anneau 109.

L'axe de traction est défini ici par un axe passant par une surface parallèle à la surface à serrer par laquelle transitent les efforts circonférentiels de verrouillage.

Selon une variante non représentée, le ou les demi-anneaux 109 peuvent être fixés par l'intermédiaire d'une ferrure sur le carter 27 ce qui permet de contenir l'alignement des demi-anneaux 109 par rapport à l'interface du carter 27 et de la structure externe fixe 15. Il est possible de réunir les deux ferrures par une structure rigide interne au mât d'accrochage 31 le plus proche possible de l'axe de traction afin d'une part d'éviter tout effort de type bras de levier engendré par le déverrouillage du demi-anneau 109 et d'autre part d'assurer l'intégrité de chargement périphérique.

Selon une variante, les ferrures fixes des modes de réalisation précédents peuvent être remplacées par une bielle reliant les points pivot disposés de chaque côté du mât d'accrochage 31 afin d'assurer la continuité de chargement périphérique. Typiquement, ladite bielle peut être placée dans un plan proche de l'axe de traction.

Dans ce cas, la bielle est « flottante », à savoir montée au travers du mât d'accrochage 31 afin de ne pas générer d'effort supplémentaire entre les deux demi-anneaux 109 et de reprendre tout déplacement différentiel entre la structure fixe de la nacelle 3 et celle du turboréacteur 5.

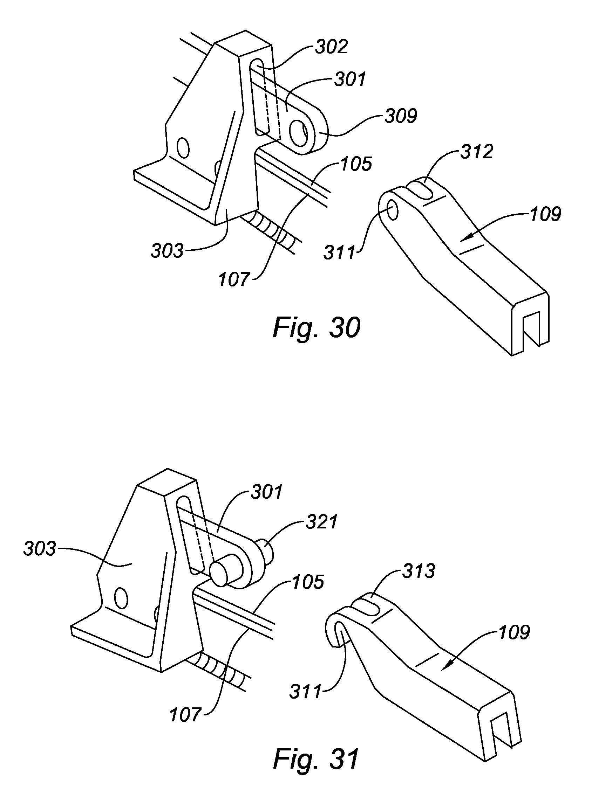

Selon un mode de réalisation représenté sur la figure 30, la bielle flottante 301 peut passer au travers d'un logement 302 ménagé dans le support 303 du demi-anneau 109 qui est porté par le carter 27. Ainsi, de manière avantageuse, lorsque le demi-anneau 109 est en position de verrouillage, à savoir retenant le carter 27 et la structure externe fixe 15, la bielle 301 n'est pas en contact avec les parois du logement 302. Une extrémité 309 de la bielle 171 peut être configurée de sorte à coopérer avec la partie complémentaire du demi-anneau 109. Pour ce faire, l'extrémité en regard de la bielle 301 présente deux excroissances 311 et 313 configurées pour enserrer l'extrémité libre 309 de la bielle 301. Les deux extrémités 309 et 311, 313 sont fixées entre elles par exemple par l'intermédiaire d'une tige ou d'un boulon (non représentée). De manière avantageuse, le support 303 ne subit que les efforts de maintien en position de maintenance du demi-anneau. Selon une variante représentée sur la figure 31, les extrémités 311 et 313 peuvent être sous la forme de crochets configurés pour enserrer une tige 321 de l'extrémité 309 de la bielle 301.

## Revendications

1. Ensemble propulsif (1) comportant un turboréacteur (5) logé dans une nacelle (3) apte à être reliée à l'aéronef par un mât d'accrochage (31), le turboréacteur (5) comprenant des pales de soufflante (11) entourées d'un carter (27) monté bord à bord avec une structure externe fixe (15) de la structure aval (13) de la nacelle (3) qui abrite des moyens d'inversion de poussée (17), ledit ensemble propulsif (1) comportant un ensemble de maintien (101)
comprenant :
- un premier élément en relief (105) appartenant à l'extrémité amont de la structure externe fixe (15) ;
- un deuxième élément (107) en relief appartenant à l'extrémité aval du carter (27) ;
lesdits premier (105) et deuxième (107) éléments en relief étant configurés pour être mis en contact l'un avec l'autre ;
- deux demi-anneaux (109) formés par une paroi définissant un logement (111), configuré pour recevoir le premier (105) et le deuxième (107) éléments en relief lorsque le carter (27) et la structure fixe externe (15) sont montés bord à bord, et des moyens de butée (113) configurés pour maintenir les premier (105) et deuxième (107) éléments en relief dans le logement (111), au moins un demi-anneau (109) étant articulé sur le mât d'accrochage (31) ou sur le carter (27) par l'intermédiaire d'un pivot fixe.

2. Ensemble selon la revendication précédente, dans lequel la paroi forme un logement (111) de section transversale sensiblement en forme de U ou de V.

3. Ensemble selon la revendication 1 ou 2, dans lequel un jeu longitudinal (115) et/ou transversal (117) est présent entre la surface non en vis-à-vis des éléments en relief (105, 107) et la paroi formant le logement (111).

4. Ensemble selon l'une quelconque des revendications précédentes, dans lequel au moins un élément en relief (105, 107) présente une rampe (121) configurée pour coopérer avec au moins un bord latéral de la paroi qui présente une surface inclinée (123) complémentaire à la rampe (121) lorsque ledit élément en relief (105, 107) est inséré dans le logement (111).

5. Ensemble selon l'une quelconque des revendications précédentes, dans lequel au moins un élément en relief (105) comporte un moyen d'étanchéité (131) de sorte à assurer l'étanchéité entre le premier élément en relief (105) et le deuxième élément en relief (107) lorsque ces derniers sont reçus dans le logement (111).

6. Ensemble selon l'une quelconque des revendications précédentes, dans lequel le ou les éléments en relief (105, 107) comportent un moyen de centrage (151, 153) transversal par rapport à l'axe longitudinal (6) de la nacelle (3).

7. Ensemble selon l'une quelconque des revendications précédentes, dans lequel au moins un demi-anneau (109) comporte un moyen de levier (161) permettant de faciliter le passage de la position de verrouillage dans laquelle les deux éléments en relief (105, 107) sont reçus dans le logement (111) à la position de déverrouillage dans laquelle les éléments en relief (105, 107) sont hors du logement (111).

8. Ensemble selon l'une quelconque des revendications précédentes, dans lequel les deux demi-anneaux (109) sont fixés entre eux par des moyens de fixation (171 ; 181).

9. Ensemble selon l'une quelconque des revendications précédentes, dans lequel au moins un demi-anneau (109) est formé d'une multitude de parties.

10. Ensemble selon l'une quelconque des revendications précédentes, dans lequel au moins un demi-anneau (109) comporte un moyen de maintien configuré pour supporter ledit demi-anneau (109) en position de déverrouillage.

11. Ensemble selon l'une quelconque des revendications précédentes, dans lequel chaque un demi-anneau (109) est monté de manière articulée à sensiblement 12h de la nacelle (3).

## Patentansprüche

1. Antriebseinheit (1), ein Turbostrahltriebwerk (5) umfassend, das in einer Gondel (3) eingesetzt ist, die durch einen Aufhängungsmast (31) mit einem Luftfahrzeug verbunden werden kann, wobei das Turbostrahltriebwerk (5) Fanschaufeln (11) umfasst, die von einem Gehäuse (27) umgeben sind, das auf Stoß mit einer festen äußeren Struktur (15) der nachgelagerten Struktur (13) der Gondel (3) montiert sind, die Schubumkehrmittel (17) einschließt, wobei die besagte Antriebseinheit (1) eine Halteeinheit (101) enthält,
folgendes umfassend:
- ein erstes hervorgehobenes Element (105), das dem vorgelagerten Ende der festen äußeren Struktur (15) angehört;
- ein zweites hervorgehobenes Element (107), das dem nachgelagerten Ende des Gehäuses (27) angehört;
wobei das besagte erste (105) und zweite (107) hervorgehobene Element konfiguriert sind, um miteinander in Kontakt gebracht zu werden;
- zwei Halbringe (109), die durch eine Wand gebildet werden, die eine Aufnahme (111) definiert, die konfiguriert ist, um ein erstes (105) und zweites (107) hervorgehobenes Element aufzunehmen, wenn das Gehäuse (27) und die feste äußere Struktur (15) auf Stoß montiert sind, sowie Anschlagmittel (113), die konfiguriert sind, um das erste (105) und zweite (107) hervorgehobene Element in der Aufnahme (111) zu halten, wobei zumindest ein Halbring (109) durch einen festen Drehzapfen gelenkig auf dem Aufhängungsmast (31) oder auf dem Gehäuse (27) verbunden ist.

2. Einheit nach dem vorherigen Anspruch, wobei die Wand eine Aufnahme (111) mit einem Querschnitt in etwa in Form eines U oder eines V bildet.

3. Einheit nach Anspruch 1 oder 2, wobei ein Spiel in Längsrichtung (115) und/ oder in Querrichtung (117) zwischen der Oberfläche, die sich nicht gegenüber den hervorgehobenen Elementen (105, 107) befindet, und der Wand vorhanden ist, welche die Aufnahme (111) bildet.

4. Einheit nach irgendeinem der vorherigen Ansprüche, wobei zumindest ein hervorgehobenes Element (105, 107) eine Rampe (121) aufweist, die konfiguriert ist, um mit zumindest einem seitlichen Rand der Wand zusammenzuwirken, die eine geneigte Oberfläche (123) ergänzend zur Rampe (121) aufweist, wenn das besagte hervorgehobene Element (105, 107) in die Aufnahme (111) eingeführt ist.

5. Einheit nach irgendeinem der vorherigen Ansprüche, wobei zumindest ein hervorgehobenes Element (105) ein Dichtmittel (131) umfasst, um die Abdichtung zwischen dem ersten hervorgehobenen Element (105) und dem zweiten hervorgehobenen Element (107) zu gewährleisten, wenn letztere in der Aufnahme (111) aufgenommen sind.

6. Einheit nach irgendeinem der vorherigen Ansprüche, wobei das oder die hervorgehobenen Elemente (105, 107) ein im Verhältnis zur Längsachse (6) der Gondel (3) quer verlaufendes Zentriermittel (151, 153) umfassen.

7. Einheit nach irgendeinem der vorherigen Ansprüche, wobei zumindest ein Halbring (109) ein Hebelmittel (161) umfasst, das den Übergang von der Verriegelungsposition, in der die beiden hervorgehobenen Elemente (105, 107) in der Aufnahme (111) aufgenommen sind, in die Freigabeposition erleichtert, in der sich die hervorgehobenen Elemente (105, 107) außerhalb der Aufnahme (111) befinden.

8. Einheit nach irgendeinem der vorherigen Ansprüche, wobei die beiden Halbringe (109) mit Befestigungsmitteln (171; 181) miteinander befestigt sind.

9. Einheit nach irgendeinem der vorherigen Ansprüche, wobei zumindest ein Halbring (109) aus einer Vielzahl von Abschnitten gebildet wird.

10. Einheit nach irgendeinem der vorherigen Ansprüche, wobei zumindest ein Halbring (109) ein Haltemittel umfasst, das konfiguriert ist, um den besagten Halbring (109) in der Freigabeposition zu halten.

11. Einheit nach irgendeinem der vorherigen Ansprüche, wobei jeder der Halbringe (109) in gelenkiger Form auf etwa der 12 Uhr Position der Gondel (3) montiert ist.

## Claims

1. A propulsion unit (1) including a turbojet engine (5) housed in a nacelle (3) able to be connected to the aircraft by an attachment mast (31), the turbojet engine (5) comprising fan blades (11) surrounded by a casing (27) mounted edge-to-edge with an outer fixed structure (15) of the downstream structure (13) of the nacelle (3) which accommodates thrust reversal means (17), said propulsion unit (1) including a holding unit (101)
comprising:
- a first raised element (105) belonging to the upstream end of the outer fixed structure (15);
- a second raised element (107) belonging to the downstream end of the casing (27);
said first (105) and second (107) raised elements being configured to be brought into contact with each other;
- two half-rings (109) formed by a wall defining a housing (111), configured to receive the first (105) and the second (107) raised elements when the casing (27) and the outer fixed structure (15) are mounted edge-to-edge, and stop means (113) configured to hold the first (105) and the second (107) raised elements in the housing (111),
at least one half-ring (109) being hinged on the attachment mast (31) or on the casing (27) by means of a fixed pivot.

2. The unit according to the preceding claim, wherein the wall forms a housing (111) with a substantially U- or V-shaped cross section.

3. The unit according to claim 1 or 2, wherein a longitudinal (115) and/or a transverse (117) clearance is present between the surface not facing the raised elements (105, 107) and the wall forming the housing (111).

4. The unit according to any one of the preceding claims, wherein at least one raised element (105, 107) has a ramp (121) configured to cooperate with at least one side edge of the wall which has a tilted surface (123) complementary to the ramp (121) when said raised element (105, 107) is inserted into the housing (111).

5. The unit according to any one of the preceding claims, wherein at least one raised element (105) includes a sealing means (131) so as to ensure the sealing between the first raised element (105) and the second raised element (107) when the latter are received in the housing (111).

6. The unit according to any one of the preceding claims, wherein the raised element(s) (105, 107) include(s) a centering means (151, 153) transverse relative to the longitudinal axis (6) of the nacelle (3).

7. The unit according to any one of the preceding claims, wherein at least one half-ring (109) includes a lever means (161) enabling to facilitate the passage of the locking position in which the two raised elements (105, 107) are received in the housing (111) at the unlocking position in which the raised elements (105, 107) are out of the housing (111).

8. The unit according to any one of the preceding claims, wherein the two half-rings (109) are fastened together by fastening means (171; 181).

9. The unit according to any one of the preceding claims, wherein at least one half-ring (109) is formed of a plurality of portions.

10. The unit according to any one of the preceding claims, wherein at least one half-ring (109) includes a holding means configured to support said half-ring (109) in the unlocking position.

11. The unit according to any one of the preceding claims, wherein each half-ring (109) is hingedly mounted at substantially 12 o'clock of the nacelle (3).
